# EUROPÄISCHE PATENTSCHRIFT

(11) **EP 1 522 005 B1**
(45) Veröffentlichungstag und Bekanntmachung des Hinweises auf die Patenterteilung: **07.11.2007**
(21) Anmeldenummer: 03787626.5
(22) Anmeldetag: 02.07.2003
(51) Int. Cl.: G05F 1/565, H02M 3/07, H02J 7/34

(54) **SCHALTUNGSANORDNUNG ZUM STABILISIEREN EINER VERSORGUNGSSPANNUNG UND VERFAHREN ZUM BETREIBEN DER SCHALTUNGSANORDNUNG**
CIRCUIT ARRANGEMENT FOR STABILIZING A SUPPLY VOLTAGE AND METHOD FOR OPERATING SAID CIRCUIT ARRANGEMENT
CIRCUITERIE POUR STABILISER UNE TENSION D'ALIMENTATION ET PROCEDE POUR FAIRE FONCTIONNER CETTE CIRCUITERIE

(30) Priorität: 17.07.2002 DE 10232416
(43) Veröffentlichungstag der Anmeldung: 13.04.2005
(73) Patentinhaber: SIEMENS AKTIENGESELLSCHAFT, 80333 München (DE)
(72) Erfinder: RENKEN, Folker, 93057 Regensburg (DE)
(86) Internationale Anmeldenummer: PCT/DE2003/002209
(87) Internationale Veröffentlichungsnummer: WO 2004/017152

(56) Entgegenhaltungen:
- EP-A- 1 130 737
- DE-A- 19 805 545
- FR-A- 2 757 806

## Beschreibung

Die Erfindung betrifft eine Schaltungsanordnung zum Stabilisieren einer Versorgungsspannung, insbesondere einer Versorgungsspannung eines Kraftfahrzeugs und ein Verfahren zum Betreiben der Schaltungsanordnung.

Die Versorgungsspannung eines von einem Energiespeicher versorgten Verbrauchers hängt zum einen von der Belastung des Energiespeichers durch den Verbraucher und zum anderen vom Ladungszustand des Energiespeichers ab.

Daher kann es bei den von dem Energiespeicher versorgten Verbrauchern zu starken Spannungsschwankungen kommen. Die so versorgten Verbraucher müssen daher weitgehend unempfindlich gegen Spannungsschwankungen sein, was hohe Anforderungen an die Verbraucher stellt.

Eine firmenintern bekannte Möglichkeit die Versorgungsspannung zu stabilisieren ist es, über einen Hochsetzsteller die Versorgungsspannung zu regeln und sie somit auf einem konstanten Wert zu halten. Eine solche Schaltungsanordnung ist jedoch sehr aufwendig und kostenintensiv, da die Schaltelemente des Hochsetzstellers mit dem gesamten, die Verbraucher versorgenden Strom belastet werden.

Aus DE 198 05 545 A1 ist eine Schaltungsanordnung zur Spannungsversorgung eines pulsförmig betriebenen Verbrauchers bekannt, bei der dem eingeschalteten Verbraucher die Versorgungsspannung mittels zweier Kondensatoren zugeführt wird, wobei der zweite Kondensator einen Hilfskondensator mit geringer Kapazität darstellt, der während des Zeitraums, in dem der Verbraucher eingeschaltet ist, so aufgeladen wird, dass die gesamte, über den beiden Kondensatoren abfallende Spannung der Betriebsspannung des Verbrauchers entspricht.

Weiter ist eine Serienschaltung eines Akkumulators und eines Superkondensators aus FR 2 757 806 A1 bekannt.

Aufgabe der Erfindung ist es, eine Schaltungsanordnung zum Stabilisieren einer Versorgungsspannung und ein Verfahren zum Betreiben der Schaltungsanordnung zu schaffen, die auf einfache Weise eine stabilisierte Versorgungsspannung für zumindest einen Verbraucher zur Verfügung stellt.

Diese Aufgabe wird erfindungsgemäß durch eine Schaltungsanordnung mit den Merkmalen des Patentanspruchs 1 und durch ein Verfahren mit den Merkmalen des Patentanspruchs 4 gelöst.

Dabei weist die Schaltungsanordnung einen ersten und einen zweiten Energiespeicher auf, wobei die Spannung über dem zweiten Energiespeicher so geregelt wird, dass die Summe der Spannungen über dem ersten und dem zweiten Energiespeicher gleich einer vorgegebenen Sollspannung ist.

Die Summe der Spannungen über dem ersten und dem zweiten Energiespeicher kann somit unabhängig von der Belastung konstant gehalten werden.

Vorteilhafte Ausgestaltung der Erfindung sind in den Unteransprüchen beschrieben.

Über einen von einem dritten Energiespeicher versorgten elektrischen Wandler wird die Spannung über dem zweiten Energiespeicher so geregelt, dass die Summe aus der Spannung über dem ersten und dem zweiten Energiespeicher gleich einem vorgegebenen Sollwert ist.

Diese Schaltungsanordnung bietet den Vorteil, dass die Anforderungen an die Schaltelemente des elektrischen Wandlers wesentlich geringer sind, als bei einem Wandler, der die Spannung eines Energiespeichers auf einen vorgegebenen Spannungswert wandelt und somit die gesamte vom System benötigte Energie übertragen muss.

Mehrere Ausführungsbeispiele werden im Folgenden anhand der schematischen Zeichnungen erläutert. Es zeigen:
- Figur 1: ein erstes Ausführungsbeispiel einer erfindungsgemäßen Schaltungsanordnung mit zwei 42V-Akkumulatoren,
- Figur 2: ein zweites Ausführungsbeispiel einer erfindungsgemäßen Schaltungsanordnung mit je einem 14V und einem 42V-Akkumulator und
- Figur 3: ein drittes Ausführungsbeispiel einer erfindungsgemäßen Schaltungsanordnung mit einem 14V und zwei 42V-Akkumulatoren.

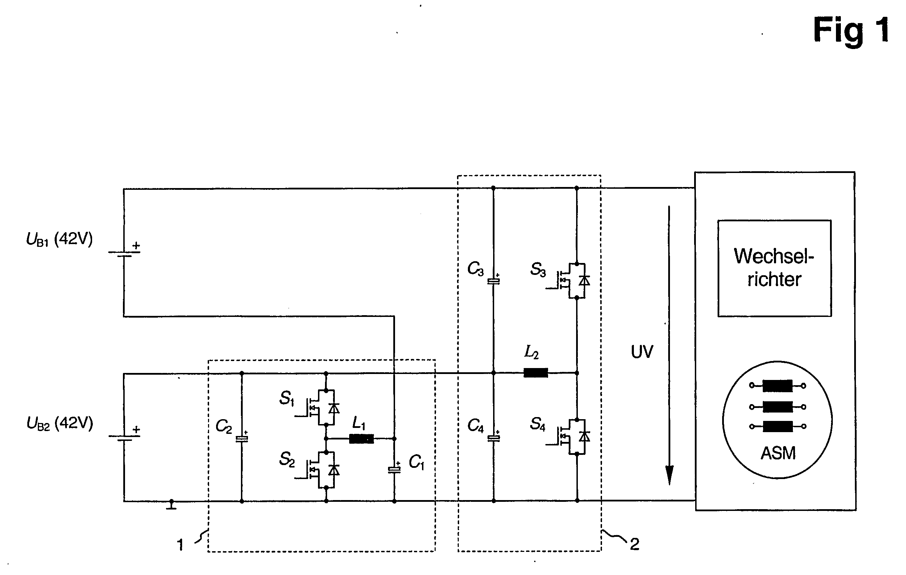

Die in Figur 1 dargestellte Schaltungsanordnung weist einen ersten 42 V-Akkumulator B1, einen zweiten Akkumulator B2, einen Energiespeicher C1 und einen ersten Wandler 1 und einen zweiten Wandler 2 auf. Die Wandler 1 und 2 sind hier als Gleichspannungswandler (DC/DC-Wandler) ausgeführt.

Dem ersten Akkumulator ist der Energiespeicher C1 in Serie geschaltet. Der Energiespeicher C1 ist hier ein Elektrolytkondensator.

Der Energiespeicher C1 weist einen positiven und einen negativen Anschluss auf. Der negative Anschluss des Energiespeichers C1 ist mit Masse elektrisch verbunden.

Die Versorgungsspannung UV, die die Schaltungsanordnung zur Verfügung stellt, kann zwischen dem positiven Anschluss des Akkumulators B1 und dem negativen Anschluss des Energiespeichers C1 abgegriffen werden.

Der zweite 42 V-Akkumulator B2 ist über den ersten Wandler 1 mit dem Energiespeicher C1 elektrisch verbunden und versorgt den Energiespeicher C1 mit Energie.

Der Wandler 1 weist einen zweiten Energiespeicher C2 auf, der parallel zum zweiten Akkumulator B2 angeordnet ist. Ebenfalls parallel zum Akkumulator B2 ist eine Serienschaltung eines ersten und eines zweiten Schaltelements S1 und S2 angeordnet. Die Schaltelemente S1 und S2 weisen jeweils einen ersten und einen zweiten Anschluss, sowie einen Steuereingang auf.

Das erste Schaltelement S1 ist mit seinem ersten Anschluss mit dem positiven Pol des Akkumulators B2 und dem positiven Anschluss des zweiten Energiespeichers C2 verbunden. Mit seinem zweiten Anschluss ist das Schaltelement S1 sowohl mit dem ersten Anschluss des Schaltelements S2 als auch mit einer Spule L1 elektrisch verbunden. Die Spule L1 ist einerseits mit dem positiven Anschluss des Energiespeichers C1 elektrisch und andererseits mit Masse verbunden.

Die Steuereingänge der Schaltelemente S1 und S2 sind mit einer nicht dargestellten Steuerschaltung verbunden und werden von dieser angesteuert.

Über den Wandler 1 wird die Spannung UC1 über dem Energiespeicher C1 so geregelt, dass die Summe aus den Spannungen UB1 und UC1 gleich einer vorbestimmten Versorgungsspannung UVsoll ist.

Falls nun die Spannung U_{B1} aufgrund einer Belastung durch einen externen Verbraucher abfällt, so wird die Spannung über dem Energiespeicher C1 erhöht, bis die Spannung UVsoll wieder erreicht ist.

Ist das erste Schaltelement S1 immer eingeschaltet, so sind die beiden Akkumulatoren B1 und B2 in Reihe geschaltet.

Ein zweiter Wandler 2 regelt die Spannung U_{B2} am Akkumulator B2 so, dass die Spannungen über den beiden Akkumulatoren B1 und B2 den gleichen Wert aufweisen.

Der Wandler 2 weist einen dritten und einen vierten Energiespeicher C3 und C4, sowie ein drittes und ein viertes Schaltelement S3 und S4 und eine zweite Spule L2 auf.

Auch hier sind die Steuereingänge der Schaltelemente S3 und S4 mit einer nicht dargestellten Steuerschaltung verbunden und werden von dieser angesteuert.

Die in Serie geschalteten Energiespeicher C3 und C4 sind zwischen dem positiven Pol des Akkumulators B1 und Masse angeordnet, wobei der erste Anschluss des Energiespeichers C3 mit dem positiven Pol des Akkumulators B1 elektrisch verbunden ist und der zweite Anschluss des Energiespeichers C3 mit dem ersten Anschluss des Energiespeichers C4 elektrisch verbunden ist. Der zweite Anschluss des Energiespeichers C4 ist mit Masse verbunden. Parallel zu den Energiespeichern C3 und C4 ist die Reihenschaltung der Schaltelemente S3 und S4 angeordnet. Diese sind ebenfalls zwischen dem positiven Pol des Akkumulators B1 und Masse angeordnet. Zwischen den Mittelabgriffen der Energiespeicher C3 und C4 und der Schaltelemente S3 und S4 ist eine weitere Spule L2 angeordnet. Der zweite Anschluss des Energiespeichers C3 ist mit dem positiven Pol des Akkumulators B2 elektrisch verbunden.

Zwischen dem positiven Pol des Akkumulators B1 und Masse, zwischen denen die Versorgungsspannung U_{V} abfällt, ist im hier dargestellten Ausführungsbeispiel über einen Wechselrichter ein Generator ASM angeschlossen.

Der Generator ASM wird von einem nicht dargestellten Antrieb angetrieben, erzeugt dadurch Energie und versorgt die beiden Akkumulatoren B1 und B2 mit Energie.

Die erfindungsgemäße Schaltungsanordnung kann auch über einen Wechselrichter mit einem Starter-Generator verbunden werden und so sowohl Energie vom Starter-Generator aufnehmen, als auch den Starter-Generator im motorischen Betrieb mit Energie versorgen.

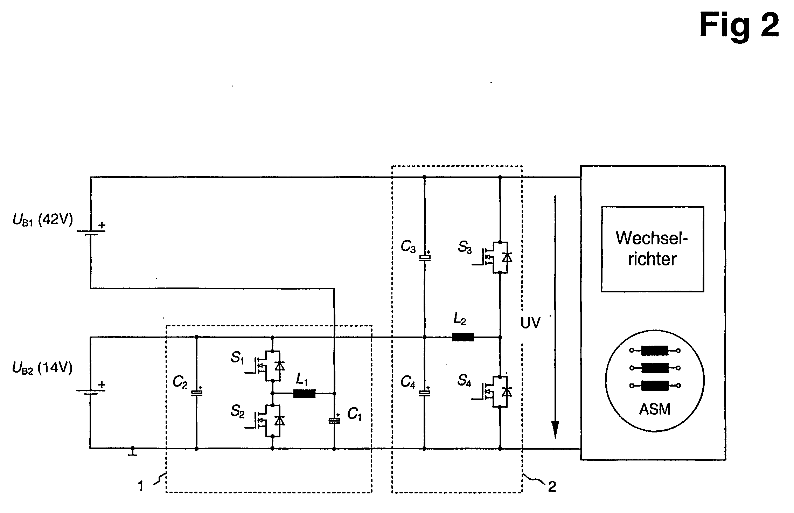

Das in Figur 2 aufgezeigte zweite Ausführungsbeispiel unterscheidet sich von dem in Figur 1 dargestellten Ausführungsbeispiel dadurch, dass die beiden Akkumulatoren B1 und B2 unterschiedliche Nennspannungen UB1 und UB2 aufweisen.

Bei dem Ausführungsbeispiel nach Figur 2 haben funktionell identische Elemente, wie bei dem ersten Ausführungsbeispiel dieselben Bezugszeichen wie in Figur 1.

Dieses Ausführungsbeispiel eignet sich beispielsweise zur Spannungsversorgung einer Schaltungsanordnung mit zwei unterschiedlichen Versorgungsspannungen. Im hier dargestellten Ausführungsbeispiel ist die erste Akkumulatorspannung U_{B1} gleich 42 Volt und die zweite Akkumulatorspannung U_{B2} gleich 14 Volt.

Über den zweiten Wandler 2 wird die Akkumulatorspannung U_{B2} immer auf 1/3 der Akkumulatorspannung U_{B1} geregelt.

Im Vergleich zu dem in Figur 1 dargestellten Ausführungsbeispiel kann beim zweiten Ausführungsbeispiel die Versorgungsspannung UV nur in einem kleineren Lastbereich konstant geregelt werden, da die Akkumulatorspannung UB2 kleiner ist und somit die Spannung am Energiespeicher C1 maximal der Spannung UB2 sein kann. Ist beispielsweise das erste Schaltelement S1 immer eingeschaltet, d. h. die Versorgungsspannung ist gleich der Summe der beiden Akkumulatorspannungen UB1 und UB2, so sinkt die Versorgungsspannung mit jeder zusätzlichen Belastung.

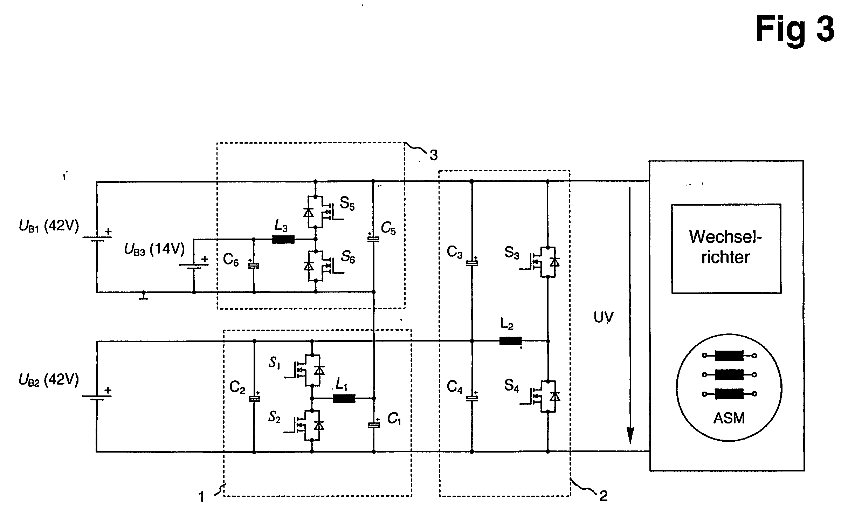

Bei dem in Figur 3 dargestellten dritten Ausführungsbeispiel tragen funktionell identische Elemente dieselben Bezugszeichen wie in Figur 1.

Parallel zum ersten Akkumulator B1 ist hier ein weiterer Energiespeicher C5 angeordnet. Die Versorgungsspannung UV ist ier gleich der Summe der Spannungen UC1 und UC5 über den Energiespeicher C1 und C5.

Ein dritter Akkumulator B3, hier mit einer Nennspannung von 14V, weist einen negativen und einen positiven Anschluss auf.

Der negative Anschluss des dritten Akkumulators B3 ist mit dem negativen Anschluss des ersten Akkumulators B1 und Masse elektrisch verbunden.

Über einen dritten elektrischen Wandler 3 wird die Spannung U_{B3} am dritten Akkumulator B3 so geregelt, dass sie der Nennspannung des Akkumulators B3 entspricht. Der dritte Wandler weist zwei in Serie geschaltete Schaltelemente S5 und S6 auf, die parallel zum Energiespeicher C5 und dem Akkumulator B1 angeordnet sind. Der gemeinsame Anschluss der Schaltelemente S5 und S6 ist mit einem ersten Anschluss einer Spule L3 elektrisch verbunden. Ein zweiter Anschluss der Spule L3 ist mit einem positiven Anschluss eines weiteren Energiespeichers C6 und dem positiven Anschluss des Akkumulators B3 elektrisch verbunden.

Der Vorteil des dritten Ausführungsbeispiels im Vergleich zum zweiten Ausführungsbeispiel aus Figur 2 liegt darin, dass sowohl der erste Akkumulator B1, als auch der dritte Akkumulator B3 Bezug zur Masse haben.

Die Energiespeicher C2, C3, C4 und C6 und die Spulen L1, L2 und L3 haben die Aufgabe, die von den Wandlern 1, 2 und 3 gewandelten Spannungen zu glätten.

## Patentansprüche

1. Schaltungsanordnung zum Stabilisieren einer Versorgungsspannung die aufweist
- einen ersten Akkumulator(B1),
- einen Energiespeicher (C1), der dem ersten Akkumulator (B1) in Serie geschaltet ist,
- einen Spannungswandler (1), der mit einer ersten Anschlussseite mit dem Energiespeicher (C1) elektrisch verbunden ist und die Spannung (U_{C1}) über dem Energiespeicher (C1) regelt,
- einen zweiten Akkumulator (B2), der mit einer zweiten Anschlussseite des Spannungswandlers (1) elektrisch verbunden ist, wobei der Energiespeicher (C1) über den Spannungswandler (1) aus dem zweiten Akkumulator (B2) mit Energie versorgt wird,
- - eine Steuereinheit, die den Spannungswandler(1) steuert und die Spannung (UC1) über dem Energiespeicher (C1) so regelt, dass die Summe der Spannungen über dem ersten Akkumulator (UB1) und über dem Energiespeicher (UC1) gleich einer vorab bestimmten Sollspannung (UVsoll) ist, und
- wobei die Schaltungsanordnung einen zweiten Spannungswandler (2) aufweist, der mit einer ersten Anschlussseite mit der Serienschaltung des ersten Akkumulators (B1) und des Energiespeichers (C1) und mit einer zweiten Anschlussseite mit dem zweiten Akkumulator (B2) elektrisch verbunden ist und
der zweite Spannungswandler (2) die Spannungen (U_{B1} und U_{B2}) des ersten und des zweiten Akkumulators (B1 und B2) so regelt, dass die Spannungen (U_{B1} und U_{B2}) an dem ersten und dem zweiten Akkumulator (B1 und B2) in einem vorbestimmten Verhältnis zueinander stehen.

2. Schaltungsanordnung nach Anspruch 1, **dadurch gekennzeichnet, dass** die Nennspannungen des ersten und des zweiten Akkumulators (B1 und B2) unterschiedlich groß sind.

3. Schaltungsanordnung nach einem der vorhergehenden Ansprüche, **dadurch gekennzeichnet, dass** die Schaltungsanordnung einen dritten Spannungswandler (3) aufweist, der mit einer Anschlussseite mit einem dritten Akkumulator (B3) und mit der anderen Anschlussseite mit dem ersten Akkumulator (B1) elektrisch verbunden ist und so einen Energieaustausch zwischen dem ersten und dem dritten Akkumulator (B1 bzw. B3) ermöglicht.

4. Verfahren zum Betreiben einer Schaltungsanordnung nach einem der Ansprüche 1 bis 3, bei dem die Spannung (UC1) über einem Energiespeicher (C1) in Abhängigkeit von der Spannung über einem ersten Akkumulator (B1) so geregelt wird, dass die Summe der Spannungen (U_{B1} und U_{C1}) über dem ersten Akkumulator (B1) und dem Energiespeicher (C1) gleich einer vorab bestimmten Sollspannung (U_{Vsoll}) ist.

5. Verfahren nach Anspruch 4, **dadurch gekennzeichnet, dass** über einen zweiten Spannungswandler (2) die Spannungen (U_{B1} und U_{B2}) des ersten und des zweiten Akkumulators (B1 und B2) so geregelt werden, dass die Spannungen (U_{B1} und U_{B2}) an dem ersten und dem zweiten Akkumulator (B1 und B2) gleich groß sind.

6. Verfahren nach Anspruch 4, **dadurch gekennzeichnet, dass** über einen zweiten Spannungswandler (2) die Spannungen (U_{B1} und U_{B2}) des ersten und des zweiten Akkumulators (B1 und B2) so geregelt werden, dass die Spannungen (U_{B1} und U_{B2}) an dem ersten und dem zweiten Akkumulator (B1 und B2) in einem vorbestimmten Verhältnis zueinander stehen.

7. Verfahren nach einem der Ansprüche 4 bis 6, **dadurch gekennzeichnet, dass** über einen dritten Spannungswandler (3) die Spannung (U_{B3}) eines dritten Akkumulators (B3) so geregelt wird, dass die Spannungen (U_{B1}, U_{B2} und U_{B3}) an dem ersten, zweiten und dritten Akkumulator (B1, B2 und B3) in einem vorbestimmten Verhältnis zueinander stehen.

## Claims

1. Circuit arrangement for stabilising a supply voltage, having
- a first accumulator (B1),
- an energy storage unit (C1), which is connected in series to the first accumulator (B1),
- a voltage transformer (1), a first terminal side of which is connected electrically to the energy storage unit (C1) and regulates the voltage (U_{C1}) via the energy storage unit (C1),
- a second accumulator (B2), which is connected electrically to a second terminal side of the voltage transformer (1), the energy storage unit (C1) being supplied with energy from the second accumulator (B2) via the voltage transformer (1), and
- a control unit, which controls the voltage transformer (1) and regulates the voltage (UC1) via the energy storage unit (C1) such that the sum of the voltages via the first accumulator (U_{B1}) and via the second energy storage unit (U_{C1}) is equal to a predetermined target voltage (U_{Vtarg}) and
- with the circuit arrangement comprising a second voltage transformer (2), which is connected electrically to a first terminal side with the series circuit of the first accumulator (B1) and of the energy storage unit (C1) and to a second terminal side with the second accumulator (B2) and
- in that the voltages (U_{B1} and U_{B2}) of the first and second accumulators (B1 and B2) are regulated via a second voltage transformer (2) such that the voltages (U_{B1} and U_{B2}) at the first and second accumulators (B1 and B2) are in a predefined ratio to each other.

2. Circuit arrangement according to claim 1,
**characterised in that** the nominal voltages of the first and second accumulators (B1 and B2) are of different orders.

3. Circuit arrangement according to one of the preceding claims,
**characterised in that** the circuit arrangement has a third voltage transformer (2), one terminal side of which is connected electrically to a third accumulator (B3) and the other terminal side of which is connected electrically to the first accumulator (B1), thus allowing an exchange of energy between the first and second accumulators (B1 and B2).

4. Method for operating a circuit arrangement according to one of claims 1 to 3, in which the voltage (UC1) via an energy storage unit (C1) is regulated as a function of the voltage via a first accumulator (B1) such that the sum of the voltages (U_{B1} and U_{C1}) via the first accumulator (B1) and the energy storage unit (U_{C1}) is equal to a predetermined target voltage (U_{Vtarg}).

5. Method according to claim 4,
**characterised in that** the voltages (U_{B1} and U_{B2}) of the first and second accumulators (B1 and B2) are regulated via a second voltage transformer (2) such that the voltages (U_{B1} and U_{B2}) at the first and second accumulators (B1 and B2) are of the same order.

6. Method according to claim 4,
**characterised in that** the voltages (U_{B1} and U_{B2}) of the first and second accumulators (B1 and B2) are regulated via a second voltage transformer (2) such that the voltages (U_{B1} and U_{B2}) at the first and second accumulators (B1 and B2) are in a predefined ratio to each other.

7. Method according to one of claims 4 to 6,
**characterised in that** the voltage (U_{B3}) of a third accumulator (B3) is regulated via a third voltage transformer (3) such that the voltages (U_{B1}, U_{B2} and U_{B3}) at the first, second and third accumulators (B1, B2 and B3) are in a predefined ratio to each other.

## Revendications

1. Agencement de circuit pour stabiliser une tension d'alimentation qui présente :
- un premier accumulateur (B1),
- un réservoir d'énergie (C₁), qui est monté en série avec le premier accumulateur (B1),
- un convertisseur de tension (1), qui est relié électriquement au réservoir d'énergie (C₁) par un premier côté de raccordement et régule la tension (U_{C1}) aux bornes du réservoir d'énergie (C₁),
- un deuxième accumulateur (B2), qui est relié électriquement à un deuxième côté de raccordement du convertisseur de tension (1), le réservoir d'énergie (C₁) étant alimenté en énergie par le biais du convertisseur de tension (1) à partir du deuxième accumulateur (B2),
- une unité de commande, qui commande le convertisseur de tension (1) et régule la tension (U_{C1}) aux bornes du réservoir d'énergie (C₁) de sorte que la somme des tensions aux bornes du premier accumulateur (U_{B1}) et aux bornes du réservoir d'énergie (U_{C1}) soit égale à une tension de consigne (UV consigne) prédéterminée, et
- dans lequel l'agencement de circuit présente un deuxième convertisseur de tension (2) qui est relié électriquement par un premier côté de raccordement à un montage en série du premier accumulateur (B1) et du réservoir d'énergie (C1) et par un deuxième côté de raccordement au deuxième accumulateur (B2) et le deuxième convertisseur de tension (2) régule les tensions (U_{B1} et U_{B2}) des premier et deuxième accumulateurs (B1 et B2) de sorte que les tensions (U_{B1} et U_{B2}) au niveau des premier et deuxième accumulateurs (B1 et B2) présentent entre elles une relation prédéterminée.

2. Agencement de circuit selon la revendication 1, **caractérisé en ce que** les tensions nominales des premier et deuxième accumulateurs (B1 et B2) ont des valeurs différentes.

3. Agencement de circuit selon l'une des revendications précédentes, **caractérisé en ce que** l'agencement de circuit présente un troisième convertisseur de tension (3) qui est relié électriquement par un premier côté de raccordement à un troisième accumulateur (B3) et par l'autre côté de raccordement au premier accumulateur (B1) et permet ainsi un échange d'énergie entre les premier et troisième accumulateur (B1 respectivement B3).

4. Procédé pour faire fonctionner un agencement de circuit selon l'une des revendications 1 à 3, dans lequel la tension (U_{C1}) aux bornes d'un réservoir d'énergie (C₁) est régulée en fonction de la tension aux bornes d'un premier accumulateur (B1) de sorte que la somme des tensions (U_{B1} et U_{C1}) aux bornes du premier accumulateur (B1) et du réservoir d'énergie (C₁) soit égale à une tension de consigne (UV consigne) prédéterminée.

5. Procédé selon la revendication 4, **caractérisé en ce que**, par le biais d'un deuxième convertisseur de tension (2) les tensions (U_{B1} et U_{B2}) des premier et deuxième accumulateurs (B1 et B2) sont régulées de sorte que les tensions (U_{B1} et U_{B2}) au niveau des premier et deuxième accumulateurs (B1 et B2) aient la même valeur.

6. Procédé selon la revendication 4, **caractérisé en ce que**, par le biais d'un deuxième convertisseur de tension (2), les tensions (U_{B1} et U_{B2}) des premier et deuxième accumulateurs (B1 et B2) sont régulées de sorte que les tensions (U_{B1} et U_{B2}) au niveau des premier et deuxième accumulateurs (B1 et B2) présentent entre elles une relation prédéterminée.

7. Procédé selon l'une des revendications 4 à 6, **caractérisé en ce que**, par le biais d'un troisième convertisseur de tension (3), la tension (U_{B3}) d'un troisième accumulateur (B3) est régulée de sorte que les tensions (U_{B1}, U_{B2} et U_{B3}) aux bornes des premier, deuxième et troisième accumulateurs (B1, B2 et B3) présentent entre elles une relation prédéterminée.
